(19) Europäisches Patentamt

European Patent Office

Office européen des brevets

(11) **EP 1 313 050 A1**

(12) **EUROPEAN PATENT APPLICATION**

(43) Date of publication:
21.05.2003 Bulletin 2003/21

(51) Int Cl.[7]: **G06F 17/60**

(21) Application number: 02251088.7

(22) Date of filing: 18.02.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: **20.11.2001 GB 0127831**

(71) Applicant: **Brainpower S.A.**
**6900 Lugano (CH)**

(72) Inventors:
• **Spampinato, Luca**
**6900 Lugano (CH)**
• **Pellegrinelli, Rocco Renato**
**6900 Lugano (CH)**
• **Bottarelli, Sandro**
**6900 Lugano (CH)**

(74) Representative: **Maggs, Michael Norman et al**
**Kilburn & Strode**
**20 Red Lion Street**
**London WC1R 4PJ (GB)**

(54) **Net asset value estimation**

(57) A system for estimating the Net Asset Value (NAV) of a fund makes use of an MLR engine (22) to compute a multiple linear regression between historical NAVs for the fund, stored in a NAV history database 12, and corresponding histories for a series of market indexes, stored in an index history database (14). An associations database (18) determines which market indexes are to be used for the analysis. The resultant regression coefficients are used by a NAV estimator (24) to generate an estimated current value of the fund based on current values of the market indexes, as supplied by a market index feed (16). The system provides an investor with estimated real-time values of a fund - not normally available since fund values are generally calculated only on a daily basis.

FIG. 1

EP 1 313 050 A1

**Description**

The invention relates to a method and system for estimating the net asset value (NAV) of a fund.

Managers of mutual funds typically publish the NAV (Net Asset Value) of funds not in real time but only on a daily basis. Normally, the NAV is computed at the end of each day on the basis of the closing values of the fund's underlying holdings (securities etc). Investors who may be interested in buying or selling funds therefore have to base their investment decisions on information which is at least one day old and which remains static throughout the day. Moreover, the normal rule is that buy and sell orders are not acted upon immediately but are deferred until the opening of business on the following day. Thus, by the time that the investor's order is actually acted upon, the information on which it is based is at least two working days old. In periods of high volatility within the financial markets, this delay can make it extremely difficult for investors to make effective decisions.

Investors' problems are compounded in that managers of mutual funds do not normally disclose, on a daily basis, what the underlying securities are that make up the fund. Holdings data may be available on a quarterly or sometimes on a monthly basis, but by the time the information is available it is too out of date to be of much assistance. The lack of information on the underlying holdings make it difficult or impossible to calculate the current or projected future NAV of a fund on the basis of the actual or projected individual values of the underlying holdings. It is of course possible crudely to predict the current or future NAV of a fund purely on the basis of the historical day by day NAV of that fund, but in volatile market conditions such estimates are liable to be extremely poor.

It is an object of the present invention to provide a system and method for generating an improved estimate, preferably in real time, of the net asset value of a fund.

It is a further object to provide a system and method of evaluating the net asset value of a fund which provides a more secure base on which investors can take investment decisions.

According to a first aspect of the present invention there is provided a method of estimating the net asset value of a fund, comprising:

    (a) obtaining:

        (i) historical index values for a plurality of market indexes;
        (ii) current index values for the said market indexes; and
        (iii) historical net asset values for the said fund;

    (b) building a model which defines a compound index in terms of the historical index values, the model being characterised by model coefficients;

    (c) optimizing the model by adjusting the coefficient values to fit the compound index to the historical net asset values; and

    (d) estimating the net asset value of the fund by applying the optimized model to the current index values.

According to a second aspect of the present invention there is provided a system for estimating the net asset value of a fund, comprising:

    (a) means for obtaining or storing:

        (i) historical index values for a plurality of market indexes;
        (ii) current index values for the said market indexes; and
        (iii) historical net asset values for the said fund;

    (b) means for building a model which defines a compound index in terms of the historical index values, the model being characterised by model coefficients;

    (c) means for optimizing the model by adjusting the coefficient values to fit the compound index to the historical net asset values; and

    (d) means for estimating the net asset value of the fund by applying the optimized model to the current index values.

By making use of this invention, as described, investors are provided with a considerable advantage in terms of time-to-market, in comparison with those who wait for the usual publication of the daily fund valuations.

The invention makes use of data about the past histories of fund NAVs, and also market indexes, as well as real-time values for the same market indexes. The past dependence of each fund on each of the indexes is preferably determined by means of a multiple linear regression (MLR) algorithm, with the estimate being carried out assuming the computed linear dependence to hold also for the future. Using such an algorithm, the system preferably produces, in addition to a real time NAV estimate, an indication of the reliability of the estimate, and a confidence interval for the estimate.

In the preferred embodiment, a set of indexes suitable to be used within an MLR model for each fund is automatically selected from a large number of candidate indexes. This is preferably carried out by applying an MLR analysis on each fund history, with respect to each of the indexes, in order to identify a smaller set of indexes which, combined with weightings computed out of the MLR coefficients, are best able to describe the specific fund historical behaviour.

Preferably, the number of indexes accepted for each fund is constrained to a small number, for example ten. The purpose of the selection is to discover a small set of indexes for each fund from which a good MLR model may be built while at the same time (for reasons of efficiency) trying to keep the number of indexes used low.

The market indexes used within the present invention may any of the conventional indexes used to track market performance, or some aspect of it. This may include not only conventional stock indexes (such as the FTSE 100 in London) but also other indexes such as currency indexes, currency exchange rates, futures and so on.

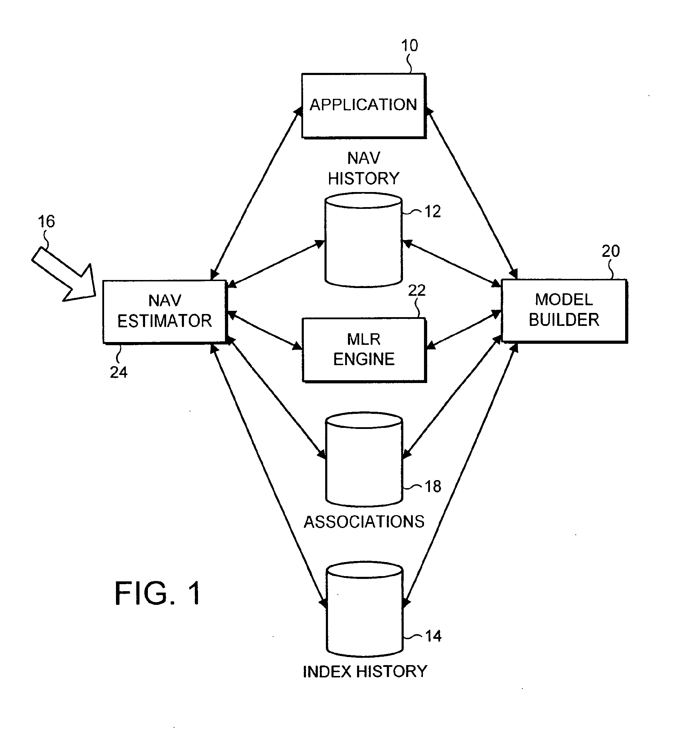

The invention may be carried into practice in various ways and one specific embodiment will now be described, by way of example, with reference to Figure 1 which shows, in schematic form, the preferred system for estimating the net asset value of a fund.

The system illustrated in Figure 1 essentially consists of a front end (a user application 10) and a back end (the rest of the system). The back end obtains the necessary information from external sources to calculate the current and/or future NAV of one or more funds, with that information then being passed to the user application for display or use in any appropriate way as required by the application. Typically, the system will automatically be estimating the NAV of several different funds at once.

For each fund under consideration, historical NAV information - preferably on a day by day basis - is collected and stored within a NAV history database 12. The information in the database is kept up to date by uploading, daily, the NAV for each fund as published by the respective fund managers. For each fund, the database associates a fund identifier to the sequence of dates and the corresponding fund NAV as at each date. Typically, daily NAV values are stored for at least the past three months.

For ease of subsequent computation, the NAV histories are adjusted for all of the events influencing daily NAV variations, other than the effects of the markets themselves. So, for example, after each fund dividend, the corresponding fund history is adjusted to simulate a re-investment of the dividend amount. More general adjustments or corrections may be made, as required, to ensure that the historical time series for each fund closely corresponds with the actual market performance of that fund.

Historic values of a number of different market indexes (possibly including currency exchange rates, and futures) are stored within an index history database 14. This database associates an index identifier for each of the stored indexes with the corresponding sequence of dates and index values. Typically, daily index values for at least the last three months are stored. This historical information is preferably updated daily with the close values of each of the indexes as published by the relevant stock markets and/or index issuers institutions.

There may be a very large number of indexes stored within the index history database 14, not all of which will necessarily be useful in calculating current values for each of the funds contained within the NAV history database 12. To reduce the amount of computation required when real time NAV estimates are prepared, each fund in the NAV history database 12 is associated with only a sub-set of those funds contained within the index history database 14. The fund/index associations are maintained within an associations database 18, the contents of which are generated by a model builder 20.

The role of the model builder 20 is to define a small set of indexes which are suitable to build a good model for each of the funds within the NAV history database 14. In order to select suitable indexes, the model builder makes use of an MLR (multiple linear regression) engine 22; for each fund in the database, an MLR analysis of the NAV history is iteratively carried out, starting from a pre-defined large set of index histories taken from the history database 14.

In theory, the "large set" of histories could comprise the entire contents of the index history database. In practice, however, for the sake of efficiency a pre-selection is statically performed, including in the starting set the main stock, bond and money market indexes. This initial pre-selection of indexes is stored in the associations database 18, and is manually updated at regular intervals, for example once a quarter.

In a first step of the procedure, the MLR engine 22 checks for multiple co-linearity between the indexes and, if this is found, eliminates the offending indexes from the set. Thus, indexes which can be very well approximated by a combination of other indexes will be removed (leaving such indexes in place could affect the soundness of the subsequent computation). The test for multiple co-linearity is performed by using the MLR engine 22 to regress every index value history against all of the others. If the resulting adjusted $R^2$ value (see below) is greater than a certain figure (for example 0.95), the main computation is not carried out. The model builder reports that fact back to the application 10, and the computation is aborted. Then, the model builder iteratively removes from the set the index with the lowest MLR, and re-invokes the MLR engine for a new analysis based on the reduced set. This stepwise refinement ends when the set is reduced to some required number of indexes, as required by the application 10, or when the quality of the model would otherwise be reduced below some application-defined threshold. The model quality is preferably measured by the quantity adjusted $R^2$ - see below - which should preferably not fall below 0.8.

The resulting set of indexes is then associated with the corresponding fund within the associations database 18, ready to be used in the NAV estimation procedure, described below.

More formally, the model builder 20 runs a procedure which may be described by the following pseudo code:

```
Model Building Procedure
(input: SetCard, RLimit)




    FOR EACH ThisFund IN Funds NAV histories DB

    {

        GET IntialCommonIndexSet from Funds/Indexes DB

        IdxSet = IntiaiCommonIndexSet

        GET the NAV history of ThisFund from Funds NAV His. DB

        GET the histories of the indexes in IdxSet from Indexes Values His. DB

        CALL MRL Engine on ThisFund and indexes in IdxSet histories

        NoGoodSet = all the multi-collinearity cases as reported by MLR

        REMOVE all the element of NoGoodSet from IdxSet


        LOOP UNTIL: Cardinality of IdxSet < = SetCard OR R < RLimit

        {

                CAL MRL Engine on ThisFund and indexes in IdxSet histories

                GET regression coefficients and adjusted R² R

                REMOVE from IdxSet the index with the lower coefficient

        }.

        IF R < RLimit THEN BREAK

          ELSE Store IdxSet associated to ThisFund in Funds/Indexes DB

    }
```

In the preferred embodiment, the model builder 20 is called by an off-line automatic scheduler (not shown) to rebuild the tables within the associations database 18. If required, the frequency of the rebuild could be defined by the application 10. A typical application 10 might specify monthly rebuilds, each rebuild requiring the calculation of a set of at least ten indexes to create a model having an adjusted $R^2$ figure of at least 0.8.

When the application 10 requires a NAV estimate for a particular fund, it requests that information from a NAV estimator 24. Alternatively, the NAV estimator may automatically calculate NAV on a periodic basis and may push that information through to the application 10.

The NAV estimator 24 uses the MLR engine 22 to compute the current NAV for a fund, using an estimating algorithm as described in more detail below. The NAV estimator accepts as input the name of the fund, and outputs the current NAV estimate for that fund along with an adjusted $R^2$ value and a confidence interval. The adjusted $R^2$ and the confidence interval are passed (together with the estimated NAV) to the application 10, thereby allowing the application to assess the quality of the estimate that has been provided.

The NAV estimator starts by fetching the appropriate set of indexes for the specific fund from the associations database. That information is then used to extract the corresponding index history values from the index history database 14. The index histories, along with the appropriate NAV history from the NAV history database 12, are supplied to the MLR engine 22. The resulting least squares coeffecients are combined with the real-time (current) values for the indexes into a NAV estimate for the fund. The current values are obtained, as needed and in real-time, from a commercial feed 16 supplying real time or delayed values for the market indexes of interest. Both subscription-based and on-demand based connection models are acceptable. In the former, the data are pushed from the feed into the system, e.g. Reuters IDN, Bloomberg DDE; in the latter, the data are obtained by the system issuing a query to the feed, e.g. Reuters investors.

The procedure may be defined by the following pseudo code:

```
            NAV Estimation Procedure
            (input: TheFund, Output: KAV-Estimate, R, CI)


                GET IdxSet as associated to TheFund in Funds/Indexes DB



                IF ldxSet does not exists THEN EXIT

                GET the NAV history of ThisFund from Funds NAV His. DB

                GET the histories of the indexes in IdxSet from Indexes Value His. DB

                CALL MRL Engine on ThisFund and indexes in IdxSet histories


                GET regression coefficients, adjusted R² R and Confidence Interval CI


                COMPUTE NAV-Estimate

                RETURN (NAV-Estimate, R, CI)
```

As explained above, the MLR engine 22 applies multiple regression analysis to the index histories. The MLR engine accepts as input the fund NAV history along with the corresponding associated index histories as created by the model builder and stored within the associations database. The engine then computes the MLR coefficients which, when used in a linear combination of the indexes, produces a compound index which is most similar to the history of the original fund. In other words, the engine computes how much each index contributes, when combined with the others, to explain the behaviour of the fund. The MLR engine also computes two quality indicators: a reliability coefficient (describing how "good" the model is) and a confidence interval (describing how accurately the combined index is able to reproduce the known fund NAV history).

We now turn to a more detailed description of the actual algorithms used by the MLR engine 22. The engine applies Multiple Linear Regression to describe the degree of linear association between a dependent variable Y and a set of $p$ ('almost' independent) variables $X_1,...,X_p$ in terms of $p$ multiple correlation coefficients. These coefficients also reflect the relationship between Y and any of the X; considered on its own.

We shall consider the case when Y is the daily quote for a single security and X; are the daily quotes for $p$ benchmarks along a period of n days.

We shall define the quote *data matrix* $\underline{X}$ as:

$$\begin{bmatrix} X_{11} & \cdots & X_{1p} \\ \vdots & \ddots & \vdots \\ X_{i1} & X_{ij} & X_{ip} \\ \vdots & & \ddots & \vdots \\ X_{n1} & \cdots & X_{np} \end{bmatrix},$$

The vector of dependent variable $\underline{Y}$ as:

$$\begin{bmatrix} y_1 \\ y_2 \\ \vdots \\ y_n \end{bmatrix}$$

and an *error vector $\underline{U}$* as:

$$\begin{bmatrix} u_1 \\ u_2 \\ \vdots \\ u_n \end{bmatrix}.$$

The dependent variable vector $\underline{Y}$ is assumed to satisfy a linear model "error" vector:

$$\underline{Y} = \underline{X}\,\underline{\beta} + \underline{U}$$

where $\underline{\beta}$ is a vector of $p$ unknown correlation coefficients and $\underline{U}$ is the error vector.
A least square estimation can be used to estimate $\underline{\beta}$. One finds that the vector b,

$$\underline{b} = (\underline{X}'\,\underline{X})^{-1}\,\underline{X}'\,\underline{Y}$$

minimises the "distance" $(\underline{Y} - \underline{X}\,\underline{\beta})' (\underline{Y} - \underline{X}\,\underline{\beta})$, thus minimising the error (where the prime symbol ' indicates a transposed matrix).
By using the fitted parameters $\underline{b}$ an estimated expression for $\underline{Y}$ can be built:

$$\hat{\underline{Y}} = X\,b = H\,Y$$

where:

$$\underline{H} = \underline{X}\,(\underline{X}'\,\underline{X})^{-1}\,\underline{X}'.$$

Given a new set of observations on the X variables $\underline{x}_0 = (x_{01}, x_{02}, \ldots, x_{0p})$ the prediction for the dependent variable $y_0$ is given by:

$$y_0 = \underline{b}' \, \underline{x}_0$$

and the least square residual $\underline{e}$ is defined as

$$\underline{e} = \underline{Y} - \overset{\wedge}{\underline{Y}}$$

If the expected value E of the error $\underline{U}$ is described by:

$$E[U_i U_j] = \delta_{ij} \, \sigma_u^2,$$

the variance of $\underline{b}$ may be shown to be:

$$\text{Var}(\underline{b}) = \sigma_u^2 \, (\underline{X}' \, \underline{X})^{-1} = \sigma_u^2 \, \underline{C}^2$$

where $\underline{C}^2 = (\underline{X}' \, \underline{X})^{-1}$.

An (unbiased) estimator of $\sigma_u^2$ is:

$$s^2 = 1/(n-p)\underline{e}'\underline{e}$$

where 's' is called the standard error of the regression.

Inferences can be made for the individual regression coefficient $\beta_j$.

A 100(1-$\alpha$)% confidence interval for $\beta_j$ is:

$$b_j \pm t_{\alpha/2,(n-p-1)} \, (s^2[\underline{C}^2]_{jj})^{1/2}$$

where $t_{\alpha,v}$ is the right tale value of a t-distribution with $v$ degrees of freedom, corresponding to a confidence level $\alpha$. It can be shown that the 100(1-$\alpha$)% confidence interval for the prediction is given by:

$$y_0 \pm t_{\alpha/2,(n-p-1)} s \, (1 + x'_0 \, (X'X)^{-1} \, x_0)^{1/2}$$

The coefficient of (multiple) determination $R^2$ is a measurement of the goodness of fit:

$$R^2 = \text{SSR} / \text{SST}$$

where:

$$\text{SST (total sum of squares)} = \sum_{i=1}^{n} (y_i - \bar{y})^2 = \underline{Y}' \, \underline{Y} - n \, \bar{y}^2$$

$$\text{SSR (regression sum of squares)} = \sum_{i=1}^{n} (\hat{y}_i - \bar{y})^2 = \underline{Y}' \, \underline{H} \, \underline{Y} - n \, \bar{y}^2$$

$R^2$ represents the proportion of the total variation in $\underline{Y}$ explained by the regression model (it is also known as "explained variance").

A better measurement of the goodness of the fit is the *adjusted $R^2$*:

$$R'^2 = 1 - \frac{\dfrac{SSE}{n-p-1}}{(\dfrac{SST}{n-1})} = 1 - \frac{E\left[\sigma_u^2\right]}{E\left[\sigma_y^2\right]}$$

where a penalty function is employed in order to reflect the number p of indexes used in the model. Another indicator of the goodness of fit is the average relative error:

$$\text{Average Relative Error} = \sqrt{\frac{1}{N}\sum_{i=1}^{N}\left(\frac{\hat{y}_i}{y_i} - 1\right)^2}$$

The algorithm used by the NAV estimator 24 uses Multiple Linear Regression (as described above) to estimate the regression coefficients of each fund with respect to each benchmark (index history). In general, the underlying assumption is that the correlation among time series changes negligibly within the time-scale of the analysis. Typically, since the estimating time frame is one day, this assumption can usually be safely accepted. The number of days of history included within the calculation affects the results. Preferably, a period of ninety days is taken, although it is found in practice that sixty days may be satisfactory. Periods shorter than 30 days should be avoided.

MLR applied to a fund NAV history on a set $\{idx_1, idx_2, ..., idx_P\}$ of index histories, produces a set $\{b_1, b_2, ..., b_P\}$ of coefficients.

Each value $NAV_{ti}$ in the fund NAV history can be combined with the corresponding values in the indexes values histories $\{idxV_{1,ti}, idxV_{2,ti}, ..., idxV_{P,ti}\}$ to produce the best estimation of $NAV_{ti}$.

$$NAV_{ti} = \sum_{j=1}^{P}\left(idxV_{j,ti} * b_j\right)$$

Thus, on the assumption that the correlation structure of the model (fund NAV vs. indexes values) can be taken as the same for the near future, or at least within the next period (day), an intra-day estimate $NAV_{RT}$ for the fund can be computed using:

$$NAV_{RT} = \sum_{j=1}^{P}\left(idxV_{j,RT} * b_j\right)$$

where $\{idxV_{1,RT}, idxV_{2,RT}, ..., idxV_{P,RT}\}$ are the actual real-time (or current) values of the indexes in the model.

We may study how good the model is by looking at the *adjusted reliability coefficient* ($R'^2$), also known as the coefficient of multiple determination. This represents the proportion of the overall variation in a time series explained by the indexes, in the time frame taken into account in the MLR. The higher the reliability coefficient (up to 1.0) the higher the predictive power of the benchmarks over the fund, i.e. the more accurate the forecast is. Whenever the MLR description is good enough, it means that we know how a variation in the indexes used reflects into the time series.

Whenever a low value (e.g. less than 0.4) of the reliability coefficient is obtained, the benchmark selection should be regarded as useless for forecasting.

The forecasted value comes with a confidence interval, representing the value range a defined percentage of forecasting is expected to fall within (this value can be customized).

This is evaluated by computing the population of errors:

$$Error_i = |NAV_{RT,i} - NAV_i|$$

That is, the difference between each NAV value of the fund and its estimation computed by combining the regression coefficient and the corresponding index values. The confidence interval is the minimal error value which is greater than given percentage of the population.

A reasonable setting for the confidence interval is 80%.

In the preferred embodiment, before running the actual model computation (above) the MLR engine carries out a further check for multiple co-linearity among the indexes. The test is performed by regressing every index that the associations database 18 indicates is to be used, against every other. If the resulting adjusted $R^2$ value is greater than a certain figure (for example 0.95) the regression computation is not carried out. The computation is aborted, and the MLR engine sends an error report to the NAV estimator 24, for reporting back to the application 10.

For completeness, some exemplary implementation details will now be given for the system illustrated in Figure 1. It will be understood of course that there are a multitude of ways in which the system could be realised in practice, and the following is not intended by any means to be comprehensive, definitive, or restrictive of the overall scope of the invention in its broadest sense.

The real-time feed 16 may be implemented by an "off the shelf" product, such as for example the product supplied by Reuters investors. Since the real-time values of indexes are quite easy to collect, and the number of relevant indexes is not too high (perhaps a few hundred) multiple feeds and/or products may be considered. The feed may be interfaced with the system of Figure 1 via any standard technology such as HTTP queries, DDE links, COM interfaces, API calls, and so on. Data may be provided in any standard format such as ASCII strings or files, XML and so on.

The requirements for the databases 12,14 and 18 are quite simple: a single data structure, a single query schema, and a simple set of update operations. Any relational DBMS would be perfectly suitable. It would also be possible to use a simpler and cheaper technology, such as ASCII or binary flat files.

The MLR engine is preferably implemented with speed and efficiency in mind. Thus, an efficient programming language such as C, C++ or Delphi is recommended.

As there are no tight performance constraints on the model builder 20 or the NAV estimator 24, these may be implemented by means of a high level programming language such as Visual Basic or Java. Both the model builder and the NAV estimator are preferably interfaced with the user application 10, so the implementation of both is preferably encapsulated in a standard component architecture such as Microsoft Com/Com+ or J2EE Enterprise Java Bean.

The precise implementation of the user application 10, and the manner in which the NAV estimates are used by that application, is a matter for the application designer. However, a couple of examples may assist.

In a simple case, the application 10 comprises a web site having a single function: to allow a user to obtain information on a variety of mutual funds. The web site may include a home page allowing the user to search for and select funds by name, type and/or category. The list of funds meeting the user's criteria is displayed, and by clicking on any fund name the user is taken to a fact sheet page giving further information about the selected fund. Here, among other structural and performance-related information about the fund, the estimated current NAV is presented, as previously described.

This application is implemented within in the Microsoft DNA framework: web pages are ASP running in a Microsoft IIS5 Web Server. The fact sheet page content is dynamically built into an XML data structure by a COM instantiated by the corresponding ASP and implemented in Visual Basic. The COM component invokes the NAV Estimator and mix its output values (NAV estimation and adjusted $R^2$) in the final XML data structure with other data extracted by a standard SQL database. The ASP then applies the proper XSLT transformation to the XML content, to produce the final HTML page. Adjusted $R^2$ is presented as a graphical slider on the screen.

In a second alternative implementation, the system is used in conjunction with a portfolio tracking application. The relevant part of the application 10 is a single page, displaying the current content and value of a mixed asset portfolio. This is the type of feature that may be offered by e-brokerage sites to retail customers, or by in-house or external suppliers of solutions to professional portfolio managers or large financial institutions.

When portfolios are constituted only by positions in stocks, the application is able to exploit a real-time data feed for stock prices: individual positions are computed from the stock prices, and are then combined into the total portfolio value. Where there is also a position in funds, such an approach cannot be used, as their value is fixed only once per day. The system of Figure 1 may be used at least partially to fill this gap, with the real time NAV estimation of the funds in the portfolio being used to evaluate the corresponding positions.

Whatever the details of the user application 10, its portfolio computation component may use the NAV estimates in exactly the same way that they use a real-time data feed for stock prices: the application simply provides a fund identifier and gets back, in return, a current NAV estimated value. The NAV estimate is then combined, in a suitably weighted manner, with the values of the other funds in the portfolio to create a global portfolio estimated value. Standard weighting techniques may be applied according to the respective confidence interval of the NAV estimate and the confidence intervals of the other values with which it is to be combined. A global confidence interval for the overall portfolio estimated value may also be determined.

**Claims**

1. A method of estimating the net asset value of a fund, comprising:

    (a) obtaining:

        (i) historical index values for a plurality of market indexes;
        (ii) current index values for the said market indexes; and
        (iii) historical net asset values for the said fund;

    (b) building a model which defines a compound index in terms of the historical index values, the model being **characterised by** model coefficients;

    (c) optimizing the model by adjusting the coefficient values to fit the compound index to the historical net asset values; and

    (d) estimating the net asset value of the fund by applying the optimized model to the current index values.

2. A method as claimed in claim 1 in which the estimated net asset value is calculated in real time.

3. A method as claimed in claim 1 or claim 2 in which the fitting is carried out by means of multiple regression.

4. A method as claimed in claim 3 including calculating multiple regression coefficients, and estimating the net asset value by applying the regression coefficients to the current index values.

5. A method as claimed in any one of the preceding claims including adjusting the historical net asset values of the fund, for example after a dividend, so that the values reflect the underlying market performance of the fund.

6. A method as claimed in any one of the preceding claims including generating a confidence interval for the estimated net asset value.

7. A method as claimed in any one of the preceding claims including generating a coefficient of multiple determination for the model.

8. A method as claimed in any one of the preceding claims in which the compound index is based on a subset of the plurality of market value indexes.

9. A method as claimed in claim 8 in which the indexes within the subset are tested to ensure that no index is too highly correlated with any one, or combination of, the others within the subset.

10. A method as claimed in claim 8 or claim 9 including automatically selecting the indexes within the subset from the said plurality of market indexes, or from a pre-selected larger subset thereof, according to regression analyses carried out between each index and the historical net asset values for the fund.

11. A method as claimed in claim 10 in which the subset is iteratively reduced in size by removing from it the worst fitting index, and regenerating the model; the iterations being stopped when the number of indexes in the subset reaches a required figure, or when the model quality would otherwise fall below a required value.

12. A system for estimating the net asset value of a fund, comprising:

    (a) means (12,14,18) for obtaining or storing:

        (i) historical index values for a plurality of market indexes;

(ii) current index values for the said market indexes; and

(iii) historical net asset values for the said fund;

(b) means for building a model which defines a compound index in terms of the historical index values, the model being **characterised by** model coefficients;

(c) means for optimizing the model by adjusting the coefficient values to fit the compound index to the historical net asset values; and

(d) means for estimating the net asset value of the fund by applying the optimized model to the current index values.

13. A system as claimed in claim 12 including means for receiving a real-time feed of the current index values.

14. A system as claimed in claim 12 or claim 13 in which the means for generating a best-fit model is a multiple regression engine (22).

15. A system as claimed in any one of claims 12 to 14 including adjustment means for adjusting the historical net asset values of the fund, for example after a dividend, so that the values reflect on underlying market performance of the fund.

16. A system as claimed in any one of claims 12 to 15 including an associations database (18) for storing, against an identifier of the said fund, a subset of the plurality of market value indexes.

17. A system as claimed in claim 16 in which the means for generating a best fit model generates the compound index based on the indexes within the subset.

18. A system as claimed in claim 17 including a model builder (20) for automatically selecting the indexes within the subset from the said plurality of market indexes, or from a pre-selected larger subset thereof, according to regression analyses carried out between each index and the historical net asset values for the fund.

19. A system as claimed in claim 18 in which the model builder (20) tests the indexes within the subset to ensure that no index is too highly correlated with any one or combination of the others within the subset.

20. A system as claimed in any one of claims 12 to 19 including a user application (10) arranged to receive the estimated net asset value for the fund, and to display the value to the user along with other fund information.

21. A system as claimed in any one of claims 12 to 19 including a portfolio tracking user application (10) arranged:

(a) to receive the estimated net asset value for the fund, the fund being contained within a portfolio;

(b) to receive real-time stock prices for stocks also contained within the portfolio; and

(c) to combine the estimated net asset value of the fund in the stock prices to generate an estimated portfolio value.

22. A system as claimed in any one of claims 12 to 19 arranged to receive, as input, a fund identifier and to return, as output, the estimated net asset value of a fund corresponding to the identifier.

FIG. 1

**European Patent Office**

**DECLARATION**

which under Rule 45 of the European Patent Convention shall be considered, for the purposes of subsequent proceedings, as the European search report

**Application Number**

EP 02 25 1088

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject-matter excluded from patentability under Article 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines for Examination in the EPO, Part B, Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| MUNICH | 28 May 2002 | Bumes, K |

EPO FORM 1504 (P04C37)